Europäisches Patentamt
European Patent Office
Office européen des brevets

(19)

(11) Publication number: **0 271 589 A1**

# EUROPEAN PATENT APPLICATION

(12)

published in accordance with Art. 158(3) EPC

(21) Application number: 87904123.4

(51) Int. Cl.³: B 01 D 53/34

(22) Date of filing: 26.06.87

Data of the international application taken as a basis:

(86) International application number:
PCT/JP87/00429

(87) International publication number:
WO88/00086 (14.01.88 88/02)

(30) Priority: 26.06.86 JP 97963/86 U

(43) Date of publication of application:
22.06.88 Bulletin 88/25

(84) Designated Contracting States:
CH DE FR GB LI SE

(71) Applicant: NIPPON KOKAN KABUSHIKI KAISHA
1-2 Marunouchi 1-chome Chiyoda-ku
Tokyo 100(JP)

(72) Inventor: KOHNO, Hiroshi
7-29-2, Shonandai Fujisawa-shi
Kanagawa-ken 251(JP)

(72) Inventor: HIGUCHI, Nariyoshi
8-3, Okamura 7-chome Isogo-ku, Yokohama-shi
Kanagawa-ken 235(JP)

(72) Inventor: YAMAGISHI, Miki
2-3-6, Nakamachi Meguro-ku
Tokyo 153(JP)

(72) Inventor: MIYACHI, Tsuneharu
5-16-19, Kokubunjidai Ebina-shi
Kanagawa-ken 243-04(JP)

(74) Representative: Sajda, Wolf E., Dipl.-Phys. et al,
MEISSNER, BOLTE & PARTNER Widenmayerstrasse 48
Postfach 86 06 24
D-8000 München 86(DE)

## (54) CHEMICAL SPRAY APPARATUS FOR REMOVING NOXIOUS GAS IN EXHAUST GAS.

(57) Chemical spray apparatus for drastically extending a nozzle close time with hardly any formation of calcium carbonate due to chemical reaction with a sprayed chemical by keeping an internal pressure at the time of high speed rotation in a rotary disc at pressure equal to, or higher than, the internal pressure of a reaction tower in which the apparatus main body is disposed, by the pressure of an inert gas or the pressure of air, from which carbon dioxide gas is removed, at the chemical supply portion of the apparatus main body or at the gap between the apparatus main body and the rotary disc.

F I G. 1

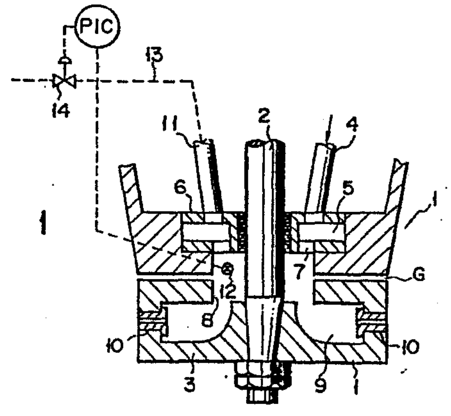


EP 0 271 589 A1

Croydon Printing Company Ltd.

# SPECIFICATION

## Apparatus for spraying chemical for removing toxic gas from exhaust gas

### Technical Field

The present invention relates to an apparatus for spraying a chemical, such as a slurry or aqueous solution of slaked lime, for removing a toxic gas such as hydrogen chloride from an exhaust gas.

### Background Art

A known method of removing toxic gases (mainly, hydrogen chloride and $SO_X$) from exhaust gases generated by a refuse incinerator is a semi-dry method of spraying a slurry or aqueous solution of a toxic gas-removing chemical into the exhaust gas. In this semi-dry method, the slurry or aqueous solution of the toxic gas-removing chemical is reacted with a toxic gas contained in the exhaust gases in a reaction tower, and the toxic gas is separated therefrom in the form of a reaction product dried by heat of the exhaust gas.

Fig. 4 shows a conventional chemical spraying apparatus incorporated within the reaction tower. The chemical spraying apparatus comprises main unit 1 fixed at a chemical spraying position (e.g., an upper position in the reaction tower) for spraying a chemical into the exhaust gas passing through a reaction tower (not shown), and rotary disk 3 disposed below main unit 1 through gap G of, e.g., 10 mm, and rotated at a high speed by

rotating shaft 2 extending through main unit 1. Chemical feed unit 5 is arranged in main unit 1 to receive a small amount of a toxic gas-removing chemical such as a slaked lime slurry through feed pipe 4. Chemical feed unit 5 is defined as a chamber such that the upper surface of chemical feed unit 5 is closed with cover 6, and flow-out hole 7 is formed in the lower end of chemical feed unit 5. Rotary disk 3 includes flow-in opening 8 for receiving the toxic gas-removing chemical flowing from chemical feed unit 5, chemical reception chamber 9, and a plurality of spray nozzles 10 for spraying the chemical from reception chamber 9 at an edge of the disk by using a centrifugal force.

In the chemical spraying apparatus, the toxic gas-removing chemical from the slaked lime slurry tower is continuously fed from chemical feed unit 5 to rotary disk 3 in a small amount. The centrifugal force generated by high-speed rotation of rotary disk 3 is used as a driving force, and the chemical is sprayed from spray nozzles 10. Therefore, the internal pressure of the disk is set to be a negative pressure during high-speed rotation of disk 3. The ambient exhaust gas, then, enters rotary disk 3 through gap G between main unit 1 and rotary disk 3 and is mixed with the toxic gas-removing chemical. The resultant mixture is sprayed from nozzles 10. Since carbonic acid gas is contained in the exhaust gas, carbonic acid gas is chemically reacted with the slaked lime slurry to produce calcium carbonate under the condition the toxic gas-removing chemical is the slaked lime slurry. As soon as calcium carbonate is produced, calcium carbonate particles are attached to the inner wall surfaces of nozzles 10, so that nozzles 10 undesirably clog with these particles.

In order to solve the above problem, the present applicant filed a Japanese Patent Application, application No. 57-194328. This prior application describes an apparatus for spraying a chemical for

separating a toxic gas from an exhaust gas, wherein an air blow pipe is connected to a gap portion between a rotary disk and a chemical feed unit or a main unit to supply external air to the gap and an internal pressure of the rotary disk during high-speed rotation is maintained by a pressure of blown air at a value higher than that of the reaction tower contained in the main unit.

The spraying apparatus of the prior invention has an effect as described in the corresponding specification. However, since external air containing carbonic acid gas is fed to increase the internal pressure of the rotary disk, the same phenomenon as in the case wherein the exhaust gas enters the rotary disk occurs although the extent of mixing of carbonic acid gas is substantially less than in entrance of the exhaust gas. More specifically, when air containing carbonic acid gas is blown into the rotary disk, carbonic acid gas in external air is chemically reacted with the spraying chemical in the rotary disk to produce calcium carbonate. As soon as calcium carbonate is produced, these particles are attached to the inner wall surface of the nozzles, thereby clogging the nozzles with the particles. However, since the amount of carbonic acid gas contained in external air is much smaller than that in the exhaust gas, the nozzles do not clog with calcium carbonate particles within about three months, thereby greatly delaying clogging of the nozzles as compared with a conventional apparatus in which the exhaust gas enters the rotary disk through the gap.

Disclosure of Invention

It is an object to provide an apparatus for spraying a chemical for removing a toxic gas from an exhaust gas, wherein nozzle clogging intervals can be greatly prolonged, e.g., the nozzles do not clog with calcium carbonate particles even when six or more months have elapsed.

In order to achieve the above object of the present invention, the spraying apparatus is characterized in that an inert gas or carbonic acid gas-removed air is supplied under pressure to a gap between a rotary disk and a main unit or a chemical feed unit therein, whereby the inert gas or carbonic acid gas-removed air is keeps a pressure within the rotary disk, during high-speed rotation, to be equal to or higher than that of a reaction tower containing the main unit.

The inert gas or carbonic acid gas-removed air does not contain carbonic acid gas unlike the external gas used in the prior art described above. Almost no calcium carbonate is produced by a chemical reaction of carbonic acid gas and a toxic gas-removing chemical. Therefore, nozzle clogging intervals can be greatly prolonged. In other words, nozzles do not clog with calcium carbonate particles even when six or more months have elapsed.

<u>Brief Description of Drawings</u>

Fig. 1 is a sectional view showing the main part of an apparatus for spraying a chemical for removing a toxic gas from an exhaust gas according to an embodiment of the present invention;

Figs. 2 and 3 are views for explaining carbonic acid gas-removing devices using a slaked lime slurry or quick lime and attached to the chemical spraying apparatus according to the present invention; and

Fig. 4 is a sectional view showing the main part of a conventional apparatus for spraying a chemical for removing a toxic gas from an exhaust gas.

<u>Best Mode for Carrying Out the Invention</u>

An embodiment of an apparatus according to the present invention will be described with reference to Fig. 1. In the same chemical spraying apparatus as in Fig. 4 (the same reference numerals as in Fig. 4 denote the same parts in Fig. 1, and a detailed description thereof will be omitted), blow pipe 11 is connected to

a portion of gap G between chemical feed unit 5 of main unit 1 or main unit 1 and rotary disk 3 (this embodiment exemplifies the former case) to supply an inert gas or external air from which carbonic acid gas is removed. The inert gas or external air is supplied outside the reaction tower. By utilizing a pressure of the inert gas or the carbonic acid gas-removed air, an internal pressure of rotary disk 3 during high-speed rotation is kept equal to or higher than an internal pressure of a reaction tower (not shown) incorporating main unit 1. The pressure within rotary disk 3 is detected by pressure sensor 12 arranged above chemical flow-in opening 8 of rotary disk 3, thereby controlling the internal pressure of rotary disk 3. A signal from pressure sensor 12 controls control valve 14 of blow path 13.

Another simple method may be used in place of the above method using pressure sensor 12 so as to maintain the constant internal pressure of the disk. More specifically, a substantially constant negative pressure is generated inside rotary disk 3 during low-speed rotation thereof. An inert gas or carbonic acid gas-removed air is fed at a constant pressure and a predetermined flow rate so as to cancel the constant negative pressure. The internal pressure of rotary disk 3 can be kept equal to or higher than the pressure of the reaction tower.

Figs. 2 and 3 respectively show devices for removing carbonic acid gas when carbonic acid gas-removed air is supplied to blow pipe 11. The carbonic acid gas-removing device in Fig. 2 comprises slaked lime slurry tank 16 for receiving slaked lime and water and stirring them into the mixture of slaked lime slurry by blades 15 (the slaked lime slurry in tank 16 is supplied to slurry feed pipe 4 shown in Fig. 1 through pump 17 and pipe 18), hermetic air cleaning tank 21, connected to slaked lime slurry tank 16, for receiving the slaked lime slurry from tank 16 upon operation of

feed pump 19 and metering the slurry upon operation of metering pump 20, and air compressor 24 for supplying air to the slaked lime slurry in air cleaning tank 21 through pipe 23 and pressure reduction valve 22. The air supplied to air cleaning tank 21 is subjected to carbonic acid gas removal by using a slaked lime slurry. The treated air is supplied from blow line 13 of Fig. 1 to blow pipe 11 for carbonic acid gas-removed air upon operation of air pump 25.

In the carbonic acid gas-removing device shown in Fig. 3, quicklime particles 29 are filled in air cleaning tower 28 comprising feed rotary valve 26, discharge rotary valve 27, and seal gates 26a and 27a which gates can be opened and closed. Low-pressure air is supplied from air compressor 30 to quicklime particles 29 through pressure reduction valve 31. Carbonic acid gas is removed from air by quicklime particles 29. Carbonic acid gas-removed air is extracted from discharge port 28a of air cleaning tower 28 and is fed by an air pump tower (not shown) from blow line 13 (Fig. 1) to supply blow pipe 11.

By using such a carbonic acid gas-removing device, carbonic acid gas-removed air is blown to gap G between rotary disk 3 and main unit 1 or chemical feed unit 5 therein. Air is not chemically reacted with the spray chemical, and almost no calcium carbonate is produced. As compared with the conventional apparatus (the apparatus shown in Fig. 4) having no clogging preventive gas blow pipe or another conventional apparatus as the apparatus of the prior art invention wherein external air is blown to the gap, the nozzle clogging intervals can be greatly prolonged. For example, the nozzles do not clog even when about six months have elapsed. When the apparatus of the present invention is applied to an exhaust gas from a refuse incinerator, a very long operation time in normal operation can be assured.

When an inert gas is fed to blow pipe 11, nitrogen

gas or the like can be used as the inert gas. In this case, nitrogen gas or the like is fed from a highpressure tank, and the pressure of the gas is reduced, thereby feeding low-pressure nitrogen gas or the like. The same effect as in the case wherein carbonic acid gas-removed air is used can be obtained.

When carbonic acid gas removal is performed with slaked lime slurry, the following chemical formula is used:

$$CO_2 + Ca(OH)_2 \rightarrow CaCO_3 + H_2O$$

When carbonic acid gas removal is performed with quick lime, the following chemical formula is used:

$$CO_2 + CaO \rightarrow CaCO_3$$

Industrial Applicability

In the apparatus for spraying a chemical for removing a toxic gas from an exhaust gas according to the present invention, an inert gas or carbonic acid gas-removed air blow pipe is connected to a portion of a gap between the rotary disk and the main unit or the chemical feed unit thereof, an inert gas or carbonic acid gas-removed air is supplied under pressure to the gap, and the pressure of the inert gas or carbonic acid gas-removed air is used to keep an internal pressure of the rotary disk during high-speed rotation at a value equal to or higher than an internal pressure of a reaction tower containing the main unit. The inert gas or carbonic acid gas-removed air does not contain carbonic acid gas unlike the external gas used in the prior art invention described above. Almost no calcium carbonate is produced by a chemical reaction of carbonic acid gas and a toxic gas-removing chemical. Therefore, nozzle clogging intervals can be greatly prolonged. In the test run, nozzles did not clog with calcium carbonate particles even when six or more months had elapsed.

Claims:

1. An apparatus for spraying a chemical for removing a toxic gas from an exhaust gas, comprising a main unit having a chemical feed unit and located at a chemical spraying position within a reaction tower, and a rotary disk located below said main unit through a gap and driven at high speed by a rotating shaft extending through said main unit, said rotary disk being provided with a flow-in opening for receiving a chemical supplied from said chemical feed unit, a reception chamber for receiving the chemical, and a plurality of spray nozzles for spraying the chemical flowing into said reception chamber from an edge of said rotary disk by a centrifugal force, characterized in that the gap between said rotary disk and said main unit or said chemical feed unit therein communicates with a blow pipe for blowing an inert gas or carbonic acid gas-removed air, whereby the inert gas or carbonic acid gas-removed air keeps a pressure within said rotary disk, during high-speed rotation, to be equal to or higher than that within said reaction tower containing said main unit.

2. An apparatus according to claim 1, wherein the internal pressure of said rotary disk is controlled such that a pressure sensor arranged above said chemical flow-in opening of said rotary disk detects a pressure acting on said rotary disk, and generates a detection signal to control a control valve of a blow path.

3. An apparatus according to claim 1, wherein the internal pressure of said rotary disk during rotation is controlled by supplying the inert gas or carbonic acid gas-removed air from said blow pipe to the gap between said rotary disk and said main unit or said chemical feed unit thereof, under a constant pressure and at a flow rate sufficient to cancel a negative pressure within said rotating rotary disk.

4. An apparatus according to claim 1, said

apparatus further comprising supplying means for supplying the carbonic acid gas-removed air to said blow pipe, wherein said supplying means includes a tank for preparing a slaked lime slurry, a hermetic air cleaning tank, connected to said slaked lime slurry tank, for receiving the slaked lime slurry from said slaked lime slurry tank upon operation of a feed pump and for metering the slaked lime slurry upon operation of a metering pump, an air compressor for supplying air to the slaked lime slurry in said air cleaning tank through a pipe with a pressure reduction valve, and a blow path connecting said air cleaning tank and said blow pipe for the carbonic acid gas-removed air.

5. An apparatus according to claim 1, said apparatus further comprising supplying means for supplying the carbonic acid gas-removed air to said blow pipe, wherein said supplying means includes an air cleaning tower and an air compressor, said air cleaning tower being provided with a feed rotary valve for quicklime, a discharge rotary valve, and seal gates which can be closed and opened, said air compressor being adapted to supply low-pressure air obtained through a pressure reduction valve to quicklime particles filled in said air cleaning tower, wherein air from which carbonic acid gas is removed by the quicklime is discharged from a discharge port of said air cleaning tower and is supplied to said blow pipe.

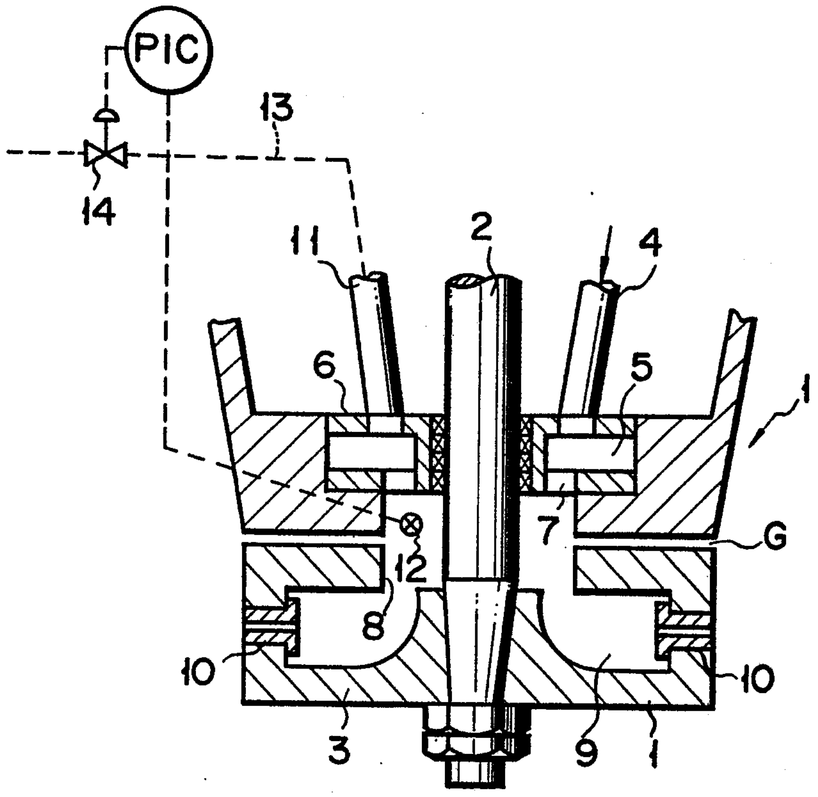
PIC
13
14
11
2
4
6
5
1
7
G
12
8
10
10
3
9
1

F I G. 1

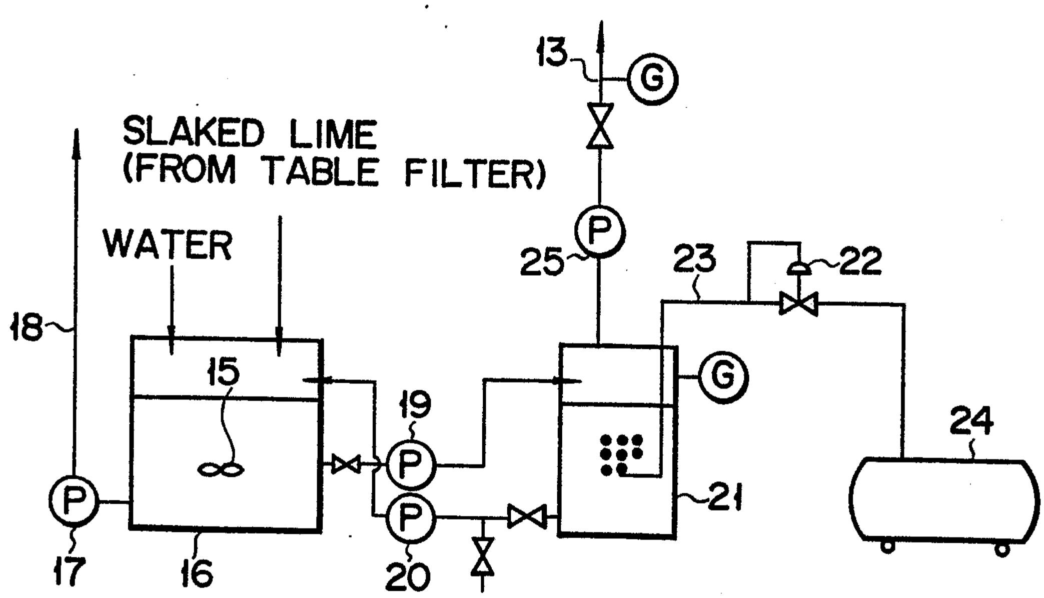
13
G
SLAKED LIME
(FROM TABLE FILTER)
WATER
P
25
23
22
18
15
19
P
G
24
P
P
21
17
16
20

F I G. 2

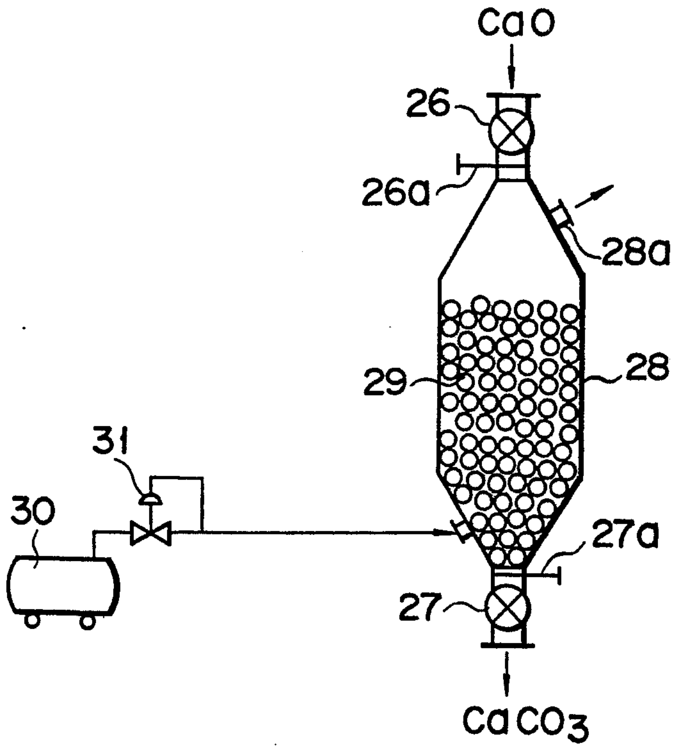


F I G. 3

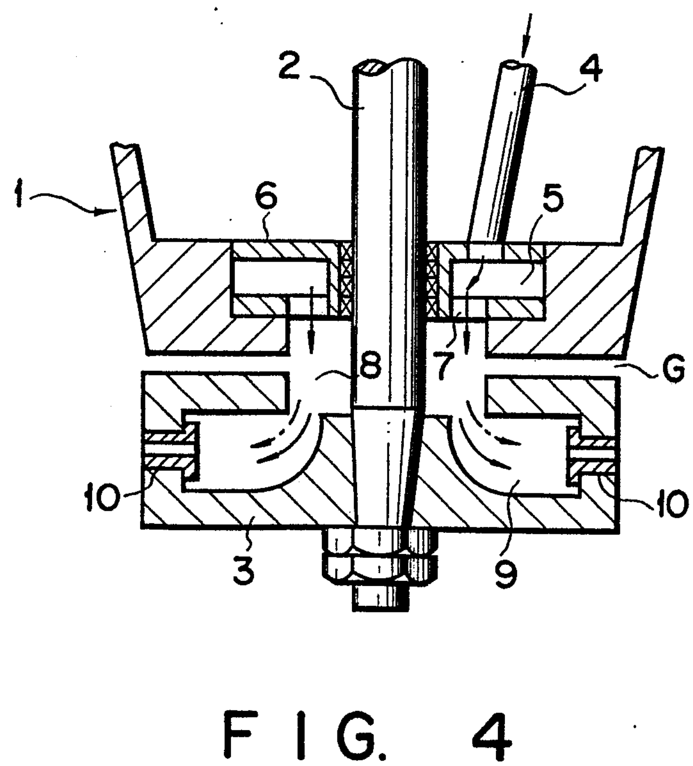


F I G. 4

# INTERNATIONAL SEARCH REPORT

0271589

International Application No PCT/JP87/00429

**I. CLASSIFICATION OF SUBJECT MATTER** (if several classification symbols apply, indicate all) [3]

According to International Patent Classification (IPC) or to both National Classification and IPC

Int.Cl$^4$ B01D53/34

**II. FIELDS SEARCHED**

Minimum Documentation Searched [4]

| Classification System | Classification Symbols |
|---|---|
| IPC | B01D53/34 |

Documentation Searched other than Minimum Documentation to the Extent that such Documents are Included in the Fields Searched [5]

| | |
|---|---|
| Jitsuyo Shinan Koho | 1926 - 1987 |
| Kokai Jitsuyo Shinan Koho | 1971 - 1987 |

**III. DOCUMENTS CONSIDERED TO BE RELEVANT** [14]

| Category * | Citation of Document, [16] with indication, where appropriate, of the relevant passages [17] | Relevant to Claim No. [18] |
|---|---|---|
| A | JP, A, 59-179134 (Nippon Kokan Kabushiki Kaisha) 11 October 1984 (11. 10. 84) (Family: none) | 1 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search [2] | Date of Mailing of this International Search Report [2] |
|---|---|
| September 1, 1987 (01. 09. 87) | September 14, 1987 (14. 09. 87) |
| **International Searching Authority** [1] | **Signature of Authorized Officer** [20] |
| Japanese Patent Office | |